# EUROPÄISCHE PATENTSCHRIFT

(11) **EP 3 885 625 B1**
(45) Veröffentlichungstag und Bekanntmachung des Hinweises auf die Patenterteilung: **20.09.2023**
(21) Anmeldenummer: 21162035.6
(22) Anmeldetag: 11.03.2021
(51) Int. Cl.: F16L 25/00, F16L 33/30

(54) **WELLROHRVERBINDUNGSANORDNUNG**
CORRUGATED HOSE CONNECTION ASSEMBLY
AGENCEMENT DE LIAISON DE TUBE À PAROI ONDULÉE

(30) Priorität: 26.03.2020 DE 102020108431
(43) Veröffentlichungstag der Anmeldung: 29.09.2021
(73) Patentinhaber: Voss Automotive GmbH, 51688 Wipperfürth (DE)
(72) Erfinder: GRAMCKOW, Erik, 53757 St. Augustin (DE); KOLBERG, Ralf, 50733 Köln (DE)
(74) Vertreter: Dr. Solf & Zapf Patent- und Rechtsanwalts PartG mbB

(56) Entgegenhaltungen:
- EP-A1- 1 681 505
- FR-A1- 2 655 126

## Beschreibung

Die Erfindung betrifft eine Verbindungsanordnung mit einem einstückigen Verbinderteil und einem fluidisch mit dem Verbinderteil verbundenen Wellrohr. Hierbei weist das Verbinderteil einen sich entlang einer Mittelachse erstreckenden Durchgangskanal auf, welcher einseitig zu dem Verbinderteil in einem an dem Verbinderteil angeformten Dorn mündet. Dabei weist der Dorn einen Haltebereich und einen Dichtbereich auf, wobei im Haltebereich mindestens zwei Halteelemente axial zur Mittelachse benachbart zueinander angeordnet sind. Das Wellrohr ist mit einem gewellten Aufsteckabschnitt in eine Aufsteckrichtung auf dem Dorn aufgesteckt und in dem Haltebereich und dem Dichtbereich des Dorns angeordnet und fluidisch mit dem Durchgangskanal des Verbinderteils verbunden.

Derartige Verbindungsanordnungen werden insbesondere in Kraftfahrzeugen verwendet, da Wellrohre sich durch bevorzugte Flexibilitätseigenschaften, insbesondere an schwingungsintensiven Einsatzgebieten, auszeichnen.

Oftmals werden derartige Verbindungsanordnungen verwendet, welche ein mehrteiliges Verbinderteil aufweisen, so dass die Wellrohre radial zwischen zwei Elementen des Verbinderteils verspannt werden. Das hat den Nachteil, dass die einzelnen Elemente an die Wellkontur angepasst werden müssen, was aufwändig und teuer ist, und die Montage einen großen Bauraum, Montageaufwand und oftmals Spezialwerkzeuge benötigt. Weiterhin ist es bekannt, das Ende eines Wellrohres als ein Glattrohr zu fertigen, so dass die Rohre eine größere Auflagefläche auf dem Verbinderteil haben. Das verringert die Herstellungskosten des Verbinderteils, erfordert jedoch abgemessene, zugeschnittene Wellrohre und in den Endbereichen angepasste Wellrohre, was die Kosten, die Vielseitigkeit und die Anpassungsfähigkeit der Wellrohre einschränkt.

Weiterhin ist es bekannt, Wellrohre zu verwenden, welche eine gekantete Wandung aufweisen, so dass die Wellrohrwandung senkrecht zum Rohrleitungskanal oder parallel zum Rohrleitungskanal verläuft, aber keinen wellenförmigen Verlauf, auch sinusförmig genannt, aufweist. Die gekantete Wandung versteift dabei das Wellrohr radial und axial zum Rohrleitungskanal und verringert dadurch die Flexibilität des Wellrohrs. Weiterhin sind gekantete Wandungen nicht so tragfähig gegenüber radialen Lasten.

Es ist beispielsweise aus der DE 10 2015 120 508 A1 bekannt, für Kühlmittelsysteme mit Wellrohren eine gattungsgemäße Verbindungsanordnung zu verwenden, bei welcher das Wellrohr auf einen Anschlussstutzen eines Verbindungselements mit ausgebildeten Halteelementen aufzudornen ist. Dabei sind die Halteelemente entsprechend einem Tannenbaumprofil axial benachbart zueinander als Haltezähne ausgebildet und erfüllen sowohl eine Dichtfunktion als auch eine Haltefunktion. Beim Aufdornen wird ein gewelltes Ende des Wellrohrs über eine Aufstecklänge gestaucht, wodurch das Wellrohr im gestauchten Abschnitt radial versteift auf dem Anschlussstutzen angeordnet ist. Diese Verbindungsanordnung zeichnet sich dabei auf Grund des einstückig ausgebildeten Verbindungselements besonders vorteilhaft in der Herstellung des Verbindungselements und der Montage des Wellrohrs aus. Weiterhin benötigt die Verbindungsanordnung einen geringen Bauraum und eignet sich daher gut für den Einsatz in engen und schwer zu erreichenden Einsatzgebieten.

Bei der genannten Verbindungsanordnung ist ein Abstand von Wellentälern und Wellenbergen des Wellrohrs über die Aufstecklänge durch die Stauchung massiv verkürzt. Dies hat nachteilig zur Folge, dass es in den Spitzen der Wellentäler und Wellenbergen zu starken Belastungen bis hin zum Bruch kommen kann. Weiterhin steht die Wellrohrleitung auf Grund der Stauchung unter einer axialen Spannung, wodurch das Wellrohr stets dazu neigt, sich zurückzuformen, was zu einem Lösen der Wellrohrleitung führt und die Dichtigkeit und die Haltewirkung gleichzeitig verschlechtert. Beide Effekte, sowohl die Bruchgefahr als auch die Verspannung durch die Stauchung, führen zu einer verkürzten Standzeit der Verbindungsanordnung. Ebenfalls ist diese Verbindungsanordnung auf Grund der verwendeten, tannenbaumartig angeordneten Haltezähne sehr schwer demontierbar, da ein zerstörungsfreies Lösen des Wellrohrs schwer bis nicht möglich ist. Bei der Bewegung des Wellrohrs gegen die Aufsteckrichtung graben sich die Haltezähne in einen Innenmantel des Wellrohrs ein, dabei kann dieser abgeschält und nachhaltig beschädigt werden, oder die Haltezähne graben sich so tief ein, dass das Wellrohr abreißt oder abgeschnitten wird.

Eine weitere gattungsgemäße Verbindung wird in der EP1681505 A1 gezeigt.

Der Erfindung liegt die Aufgabe zugrunde, eine Verbindungsanordnung bereitzustellen, welche insbesondere bei zumindest der Beibehaltung der vorteilhaften Eigenschaften der bekannten Verbindungsanordnung hinsichtlich Bauraum, Herstellung und Montage eine längere Standzeit, insbesondere geringere Belastungen und Spannungen des Wellrohrs aufweist.

Die Aufgabe wird erfindungsgemäß durch die Merkmale des Anspruchs 1 dadurch gelöst, dass der Haltebereich und der Dichtbereich axial zu der Mittelachse hintereinander angeordnet sind. Der Dorn hat im Dichtbereich eine glatte, zum Wellrohr weisende Oberfläche ausgebildet, welche einen größeren, zum Wellrohr weisenden Außendurchmesser aufweist als ein zum Dorn weisender Innendurchmesser eines Wellentals des Wellrohrs. Zumindest ein Halteelement ist als ein zu der Mittelachse, insbesondere vollumfängliches, Wellenelement des Dorns ausgebildet, welches an einem Wellenmaximum des Wellenelementes einen größeren, zum Wellrohr weisenden Außendurchmesser aufweist als der Innendurchmesser des Wellentals des Wellrohrs. Erfindungsgemäß weist das Wellenelement des Dorns zusätzlich eine Halteschräge auf, welche den Außendurchmesser von dem Wellenmaximum in Aufsteckrichtung auf einen Haltedurchmesser verringert.

Mit der erfindungsgemäßen Ausführung wird eine Verbindungsanordnung bereitgestellt, welche auf Grund ihres wellenförmigen Halteelements besonders gut für sinusförmige Wellrohre geeignet ist. Weiterhin hat die axial angeordnete Trennung von Dichtbereich und Haltebereich zur Folge, dass das Wellrohr im Dichtbereich und Haltebereich unterschiedlich, insbesondere unabhängig vom jeweils anderen Bereich, radial gedehnt und axial gehalten werden kann. In dem Haltebereich hat das Halteelement die Wirkung, dass sich das Wellrohr nicht gegen die Aufsteckrichtung von dem Dorn löst. Der Dichtbereich erfüllt den Zweck, dass sich das Wellrohr mit einem Wellental nicht von dem Dorn abhebt und eine Leckage entsteht, indem der Dorn im Dichtbereich das Wellrohr radial aufdehnt. Zudem ist die Auflagefläche der Wellentäler des Wellrohrs auf den Dorn im Dichtbereich minimal, so dass ein Anpressdruck an der Auflagefläche die Dichtungswirkung verstärkt.

Dass sich das Wellrohr vom Dorn "nicht löst", bedeutet im Sinne der Erfindung insbesondere, dass sich das Wellrohr bis zu einem Erreichen einer Lösekraft gegen die Aufsteckrichtung nicht von dem Dorn löst. Insbesondere schließt "nicht löst" ein zerstörungsfreies Lösen des Wellrohrs vom Dorn beim Erreichen der Lösekraft nicht aus.

Zu diesem Zweck ist das Wellrohr in bekannter Art radial elastisch dehnbar ausgebildet, wobei beim Anordnen des Wellrohrs auf dem Dorn das Wellrohr vorzugsweise im elastischen Bereich radial gedehnt wird. Gegen die radiale Dehnung durch den Dorn wirkt eine radiale Rückstellkraft, welche insbesondere von Geometrie und Werkstoff, aber auch von Umwelteinflüssen, wie z. B. der Umgebungstemperatur abhängig ist und das Wellrohr dichtend auf dem Dorn anordnet.

Auf Grund der axialen Trennung auf dem Dorn zwischen dem Dichtbereich und dem Haltebereich ist eine Überlagerung zwischen radialen und axialen Spannungen verringert, wodurch das Wellrohr für eine vorteilhafte Dichtungseigenschaft geringfügiger radial gedehnt, bzw. für eine ausreichende axiale Haltekraft geringfügiger axial blockiert und/oder radial verspannt werden muss.

Ein weiterer Vorteil besteht im Wellenelement des Dorns darin, dass durch die Wellenform das Wellrohr mit seinem Aufsteckabschnitt leichter auf den Dorn aufgesteckt werden kann, wobei sich das Wellenelement des Dorns am Wellenmaximum vorteilhaft zwischen zwei Wellentäler des Wellrohrs legt und einen axialen Widerstand gegen eine Bewegung des Wellrohrs axial zu der Mittelachse erzeugt.

In einer vorteilhaften Ausführungsform der Erfindung weist das Wellenelement des Dorns eine Einführschräge auf. Die Einführschräge vergrößert den Außendurchmesser des Dorns in Aufsteckrichtung auf den Außendurchmesser im Wellenmaximum. Die Schrägen haben den Vorteil, dass sie einen Kompromiss zwischen einem Montageaufwand und einem Demontageaufwand darstellen, indem notwendige Steck- und Lösekräfte durch die jeweiligen Steigungen angepasst werden können. In diesem Sinne ist in einer bevorzugten Variante die Einführschräge in Aufsteckrichtung vorzugsweise flacher zum Wellenmaximum des Wellenelementes des Dorns ansteigend ausgebildet als die Halteschräge gegen die Aufsteckrichtung zu dem Wellenmaximum. Zweckmäßig ist dadurch eine aufzuwendende Lösekraft gegen die Aufsteckrichtung zum Lösen des Wellrohrs von dem Steckverbinder größer als eine aufzuwendende Steckkraft in Aufsteckrichtung zum Aufstecken des Wellrohrs.

Besonders bevorzugt ist zumindest die Halteschräge in einem Anlagebereich für das Wellental des Wellrohrs bogenförmig mit einem Halteradius gegen die Aufsteckrichtung zum Wellenmaximum ansteigend ausgebildet. Insbesondere sinusförmige Wellrohre können sich dabei leicht an die mit einem Halteradius bogenförmig ausgebildete Halteschräge anlegen und bei einer axialen Beanspruchung gegen die Aufsteckrichtung sich zu einer großflächigen Anlage an der Halteschräge verformen. Zweckmäßig ist das Wellrohr durch ein derartiges Wellenelement auf Grund der großen Auflagefläche zumindest teilweise, insbesondere größtenteils, durch eine Reibkraft auf dem Dorn gegen die Aufsteckrichtung gehalten. Insbesondere verringert dies weiterhin die Notwendigkeit von scharfkantigen Haltezähnen bzw. macht scharfkantige Haltezähne unnötig.

Die vorteilhafte Wirkung des Wellenelements des Dorns mit Halteradius lässt sich auch in einer praktischen Form der Erfindung vorteilhaft darin verwirklichen, dass der Halteradius der bogenförmigen Halteschräge einem Wellenradius eines Innenmantelabschnitts des Wellrohrs im Bereich des Wellentals entspricht. Eine derartige Ausführung hat den Vorteil, dass die Halteschräge derart auf den Innenmantelabschnitt des Wellrohres angepasst ausgebildet ist, dass ohne eine Anpressung des Wellentals an die Halteschräge, d. h. bereits in einem unbelasteten Zustand, das Wellrohr großflächig an der bogenförmigen Halteschräge anliegt. Zweckmäßig wird eine Reibfläche und dadurch der axiale Widerstand bzw. die notwendige Lösekraft gegen die Aufsteckrichtung erhöht.

Zweckmäßig weist der Dorn eine Außenmantelfläche auf, welche zumindest im Bereich der Halteschräge vorzugsweise eine Haltestruktur ausgebildet hat. Die Haltestruktur steigert die Reibkraft zumindest gegen die Aufsteckrichtung zwischen dem Wellrohr und dem Dorn bzw. dem Wellenelement.

Insbesondere bei besonders großen Druckbelastungen im Rohrleitungskanal oder einer hohen Belastung der Verbindungsanordnung, welche die Gefahr des Lösens des Wellrohrs vom Verbinderteil auslösen könnte, ist zweckmäßig ein Halteelement als ein zu der Mittelachse, insbesondere vollumfänglicher, Haltezahn ausgebildet. Insbesondere weist der Haltezahn eine Aufsteckschräge auf, welche vorzugsweise den Außendurchmesser des Dorns in Aufsteckrichtung auf einen Klemmdurchmesser vergrößert. Vorzugsweise weist der Haltezahn dabei eine in Aufsteckrichtung weisende Klemmkante auf. Der Haltezahn blockiert vorteilhaft das Wellental gegen die Aufsteckrichtung zumindest formschlüssig oder kraftformschlüssig. Die Klemmkante erhöht dadurch die zu überwindende Lösekraft zum Lösen des Wellrohrs vom Dorn.

Insbesondere ist die Klemmkante als Schneidkante ausgebildet, wodurch der Haltezahn das Wellenelement des Dorns dadurch ergänzt, dass er mittels seiner Klemmkante oder Schneidkante die notwendige Lösekraft steigert. Vorteilhaft verhindert die Schneidkante durch ein Eingraben in den Innenmantel des Wellrohrs, dass sich das Wellrohr gegen die Aufsteckrichtung von dem Dorn löst.

Insbesondere entspricht dabei der Klemmdurchmesser des Dorns mindestens dem Außendurchmesser im Wellenmaximum des Wellenelementes des Dorns. Weiterhin ist es zweckmäßig, wenn in Aufsteckrichtung unmittelbar hinter der Klemmkante bzw. der Schneidkante der Außendurchmesser des Dorns dem Haltedurchmesser entspricht.

In einer abgewandelten Variante ist die Klemmkante bzw. die Schneidkante als sprunghafter Wechsel von dem Klemmdurchmesser auf einen kleineren Durchmesser des Dorns, insbesondere den Haltedurchmesser ausgebildet.

Für eine besonders günstige und effiziente Herstellung der Verbindungsanordnung hat sich vorteilhaft die Verwendung von sinusförmigen Wellrohren herausgestellt. Im Besonderen kann das Verbinderteil hinsichtlich der Herstellung verbessert werden, indem das Verbinderteil monolithisch einstückig ausgebildet ist. Als vorteilhaft hat sich zudem herausgestellt, wenn das Verbinderteil aus einem thermoplastischem Kunststoff gebildet ist.

Weitere vorteilhafte Ausgestaltungen der Erfindung ergeben sich aus der folgenden Figurenbeschreibung und den abhängigen Unteransprüchen.

Es zeigen:
- Fig. 1: eine Teilschnittansicht senkrecht zu einer Mittelachse auf eine erste Ausführung einer Verbindungsanordnung mit zwei Wellenelementen als Halteelemente,
- Fig. 2: eine Teilschnittansicht senkrecht zu der Mittelachse auf eine zweite Ausführung einer Verbindungsanordnung mit einem Wellenelement und einem Haltezahn als Halteelemente und
- Fig. 3: einen Längsschnitt durch ein sinusförmiges Wellrohr in einem nicht aufgesteckten Zustand.

In den verschiedenen Figuren der Zeichnung sind gleiche Teile stets mit denselben Bezugszeichen versehen.

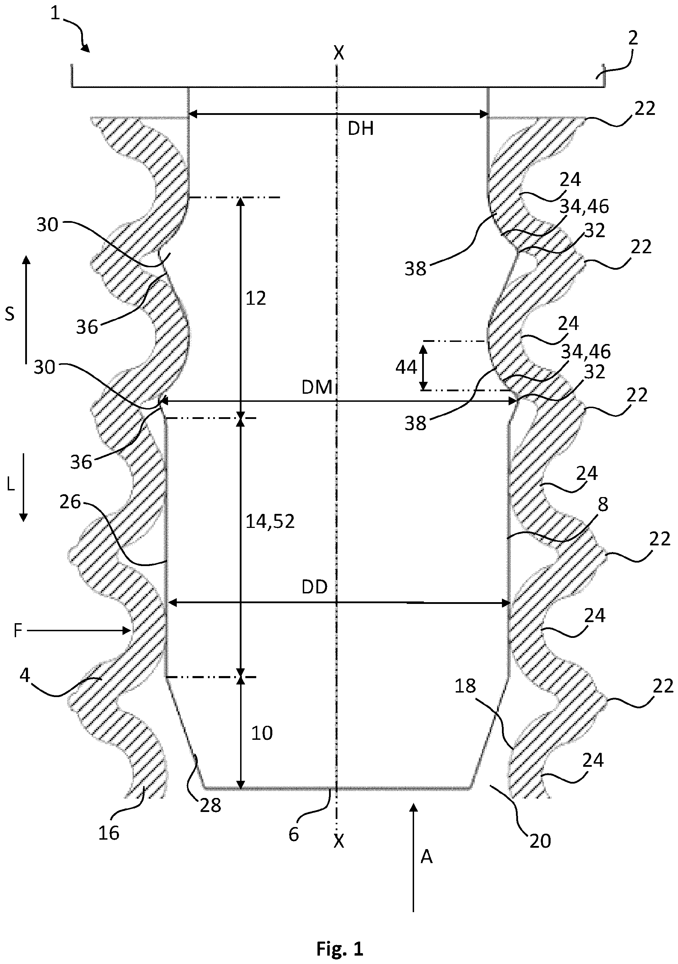

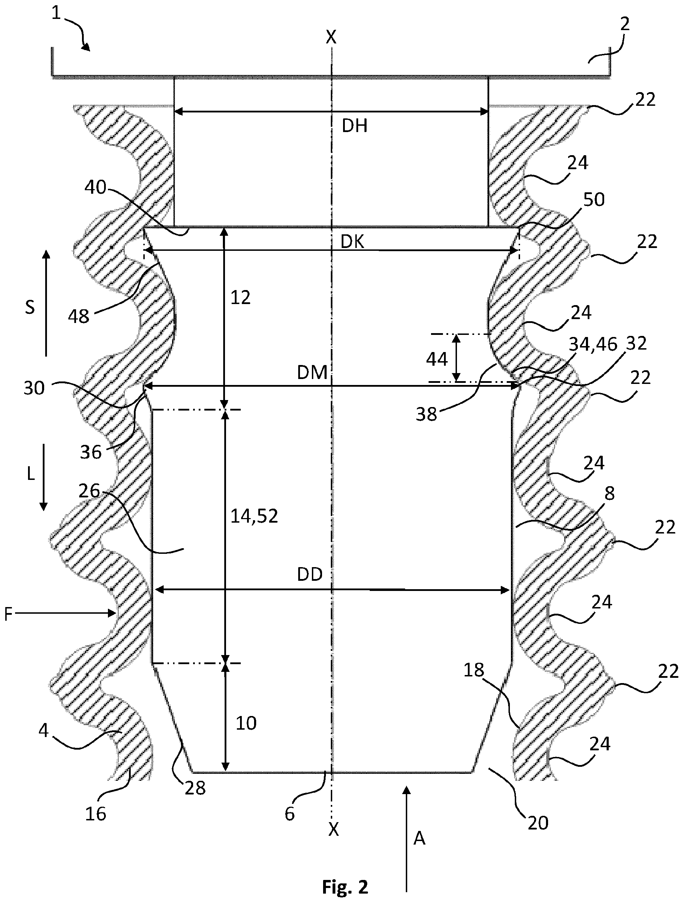

Die Figuren 1 und 2 zeigen eine Verbindungsanordnung 1. Wie dargestellt, weist die Verbindungsanordnung 1 ein einstückiges Verbinderteil 2 und ein fluidisch mit dem Verbinderteil 2 verbundenes Wellrohr 4 auf.

Bei dem Wellrohr 4 handelt es sich insbesondere um ein sinusförmiges Wellrohr 4 entsprechend den Figuren 1 und 2, welches vorteilhaft flexibel, stauchbar und gegen radialwirkende Einflüsse widerstandsfähig ist.

Das Verbinderteil 2 weist einen, sich entlang einer Mittelachse X erstreckenden, nicht dargestellten, Durchgangskanal auf. Der Durchgangskanal mündet dabei einseitig zu dem Verbinderteil 2, wie in den Figuren 1 und 2 dargestellt, in einer Austrittsöffnung 6 eines an dem Verbinderteil 2 angeformten Dorns 8. Dabei weist der Dorn 8 vorzugsweise einen Mündungsbereich 10 auf, wobei der Außendurchmesser des Dorns 8 im Mündungsbereich 10 an der Austrittsöffnung 6 vorzugsweise geringer ist als der kleinste Innendurchmesser des Wellrohrs 4.

Weiterhin weist der Dorn 8 einen Haltebereich 12 und einen Dichtbereich 14 auf, wobei im Haltebereich 12 mindestens zwei Halteelemente axial zur Mittelachse X benachbart zueinander angeordnet sind. Der Dichtbereich 14 schließt sich dabei vorzugsweise unmittelbar an den Mündungsbereich 10 an.

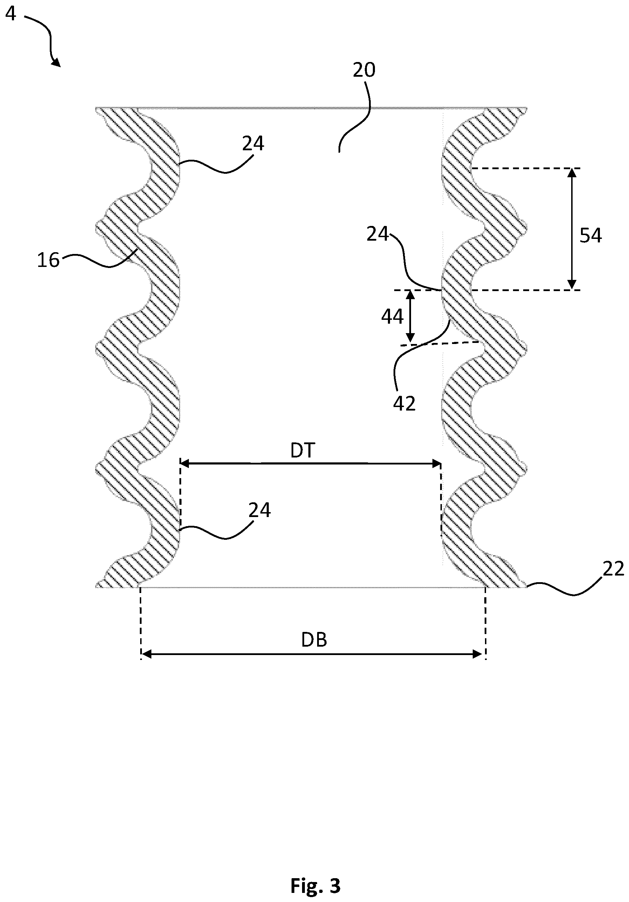

Das Wellrohr 4 ist mit einem gewellten Aufsteckabschnitt in eine Aufsteckrichtung A auf den Dorn 8 aufgesteckt. Zweckmäßig ist das Wellrohr 4 über die gesamte Länge gewellt ausgebildet. Das Wellrohr 4 weist eine Wellrohrwandung 16 auf, wobei ein Innenmantel 18 des Wellrohrs 4 einen Rohrleitungskanal 20 umschließt. Wie in den Figuren 1 und 2 beispielhaft dargestellt, weist die Wellrohrwandung 16 einen Verlauf auf, welcher stets von einem Wellenberg 22 in ein Wellental 24 übergeht, wobei in einem unbelasteten und unaufgesteckten Zustand, wie in Figur 3 dargestellt, ein Innendurchmesser DT des Wellrohrs 4 im Wellental 24 geringer ist als ein Innendurchmesser DB bei einem Wellenberg 22.

Das Wellrohr 4 ist in der Verbindungsanordnung 1 in dem Haltebereich 12 und dem Dichtbereich 14 des Dorns 8 angeordnet, wobei das Wellrohr 4, entsprechend den Figuren 1 und 2, fluidisch mit dem Durchgangskanal des Verbinderteils 2 verbunden ist. Insbesondere wird das Wellrohr 4 über den Dichtbereich 14 auf den Dorn 8 derart aufgesteckt, dass er, wie beschrieben und in den Figuren 1 und 2 dargestellt, sowohl im Dichtbereich 14 als auch im Haltebereich 12 angeordnet ist.

Erfindungsgemäß sind der Haltebereich 12 und der Dichtbereich 14, entsprechend den Ausführungen in den Figuren 1 und 2, axial zu der Mittelachse X hintereinander angeordnet. Insbesondere schließt sich, wie in den Figuren 1 und 2 dargestellt, dem Mündungsbereich 10 in Aufsteckrichtung A gesehen der Dichtbereich 14 und nachfolgend der Haltebereich 12 an. Die Trennung von dem Dichtbereich 14 und dem Haltebereich 12 hat zur Folge, dass das Wellrohr 4 im Dichtbereich 14 und Haltebereich 12 anders, insbesondere unabhängig vom jeweils anderen Bereich, radial gedehnt und axial gehalten werden kann.

Der Dorn 8 hat erfindungsgemäß im Dichtbereich 14 eine glatte, zum Wellrohr 4 weisende Oberfläche 26 ausgebildet, welche einen größeren, zum Wellrohr 4 weisenden Außendurchmesser DD aufweist als ein zum Dorn 8 weisender Innendurchmesser DT des Wellrohrs 4 im Wellental 24. Insbesondere ist die Oberfläche 26 des Dorns 8 im Dichtbereich 14 parallel zu der Mittelachse X verlaufend ausgebildet. Damit erfüllt der Dichtbereich 14 auf Grund einer radialen Dehnung des Wellrohrs 4 im Dichtbereich 14 den Zweck, dass sich das Wellrohr 4 mit zumindest einem Wellental 24 nicht von dem Dorn 8 abhebt und eine Leckage entsteht.

Zwecks einer einfachen Montage wird das Wellrohr 4 in einer vorteilhaften Ausführung über den Mündungsbereich 10, welcher vorzugsweise eine konisch ausgebildete und sich im Durchmesser in Aufsteckrichtung A erweiternde, zum Wellrohr 4 weisende Oberfläche 28 aufweist, auf den Außendurchmesser DD des Dorns 8 im Dichtbereich 14 aufgedehnt.

Erfindungsgemäß ist zumindest ein Halteelement als ein zu der Mittelachse X, insbesondere vollumfängliches, Wellenelement 30 des Dorns 8 ausgebildet, welches an einem Wellenmaximum 32 des Wellenelements 30 einen größeren, zum Wellrohr 4 weisenden Außendurchmesser DM aufweist als der Innendurchmesser DT des Wellrohrs 4 im Wellental 24. Der Dichtbereich 14 des Dorns 8 hat mittels des Wellenelements 30, bzw. der Halteelemente, die Wirkung, dass sich das Wellrohr 4 nicht gegen die Aufsteckrichtung A bis zum Erreichen einer bestimmten, gegen die Aufsteckrichtung A wirkenden Lösekraft L von dem Dorn 8 löst. Vorzugsweise ist das Wellrohr 4 beim Erreichen bzw. Überschreiten der Lösekraft L gegen die Aufsteckrichtung A zerstörungsfrei von dem Dorn 8 trennbar.

Ein weiterer Vorteil besteht im Wellenelement 30 des Dorns 8 darin, dass durch die Wellenform das Wellrohr 4 mit seinem Aufsteckabschnitt leichter auf den Dorn 8 aufgesteckt werden kann, wobei sich das Wellenelement 30 des Dorns 8, wie in den Figuren 1 und 2 dargestellt, am Wellenmaximum 32 vorteilhaft zwischen zwei Wellentäler 24 legt und einen axialen Widerstand gegen eine Bewegung des Wellrohrs 4 axial zu der Mittelachse X erzeugt.

Figur 1 zeigt dabei eine zweckmäßige Ausführung, gemäß welcher zumindest zwei, insbesondere wie dargestellt genau zwei Halteelemente als zwei zu der Mittelachse X, insbesondere vollumfängliche, Wellenelemente 30 des Dorns 8 ausgebildet sind. Dabei weisen die Wellenelemente 30 des Dorns jeweils an einem Wellenmaximum 32 des jeweiligen Wellenelementes 30 einen größeren, zum Wellrohr 4 weisenden Außendurchmesser DM auf als der Innendurchmesser DT des Wellrohrs 4 im Wellental 24.

Figur 2 zeigt eine bevorzugte Ausführung, wobei das zumindest eine Wellenelement 30 des Dorns 8 mit einem andersartig ausgebildeten Halteelement kombiniert wird, wodurch die vorteilhaften Eigenschaften der unterschiedlichen Halteelemente kombiniert werden.

Auf Grund der axialen Trennung auf dem Dorn 8 zwischen dem Dichtbereich 14 und dem Haltebereich 12 in der erfindungsgemäßen Art und Weise wird durch ein synergetisches Zusammenwirken von Dichtbereich 14 und Haltebereich 12 eine Überlagerung zwischen radialen und axialen Spannungen verringert, wodurch das Wellrohr 4 für eine vorteilhafte Dichtungseigenschaft geringfügiger radial gedehnt bzw. für eine ausreichende axiale Haltekraft geringfügiger axial blockiert und/oder radial verspannt werden muss.

Vorteilhaft wird mit der erfindungsgemäßen Ausführung eine Verbindungsanordnung 1 bereitgestellt, welche auf Grund eines Wellenelements 30 des Dorns 8 besonders vorteilhaft für sinusförmige Wellrohre 4 geeignet ist. Das Wellrohr 4 der Verbindungsanordnung 1 ist dabei radial elastisch dehnbar ausgebildet, wobei beim Anordnen des Wellrohrs 4 auf dem Dorn 8 das Wellrohr 4 vorzugsweise im elastischen Bereich gedehnt wird. Eine Dehnung im elastischen Bereich begünstigt die Mehrfachanwendung der Verbindungsanordnung 1 bzw. ermöglicht eine zerstörungsfreie Demontage. Gegen die radiale Dehnung des Wellrohrs 4 durch den Dorn 8 wirkt eine radiale Rückstellkraft F, welche insbesondere von der Geometrie und dem Werkstoff des Wellrohrs 4, aber auch von Umwelteinflüssen, wie z. B. der Umgebungstemperatur abhängt und das Wellrohr 4 dichtend auf dem Dorn 8 anordnet.

In einer vorteilhaften Ausführung weist das Wellenelement 30 des Dorns 8 eine Halteschräge 34 auf, insbesondere entsprechend den Figuren 1 und 2. Die Halteschräge 34 verringert den Außendurchmesser DM von dem Wellenmaximum 32 in Aufsteckrichtung A auf einen Haltedurchmesser DH. Über den Haltedurchmesser DH kann die radiale Verspannung des Wellrohrs 4 im Haltebereich 12 angepasst werden. Vorzugsweise ist der Haltedurchmesser DH derart gewählt, dass das Wellrohr 4 bei einer elastischen Rückverformung nach dem Wellenmaximum 32 auf dem Dorn 8 mit dem Haltedurchmesser DH zumindest mit einem Wellental 24 anliegt.

Zweckmäßig weist das Wellenelement 30 des Dorns 8 eine Einführschräge 36 auf, welche den Außendurchmesser des Dorns 8 in Aufsteckrichtung A auf den Außendurchmesser DM im Wellenmaximum 32 vergrößert. Mittels der Einführschrägen 36 kann der Außendurchmesser DM des Dorns 8 im Wellenmaximum 32 radial zur Mittelachse X größer ausgebildet sein, wobei die Einführschräge 36 dabei das Überwinden des Wellenmaximums 32 für das Wellrohr 4 erleichtert und damit eine aufzubringende Steckkraft S verringert.

In einer alternativen, nicht dargestellten Ausführung ohne eine Einführschräge 36 entspricht der Außendurchmesser DM des Dorns 8 im Wellenmaximum 32 dem Außendurchmesser DD im Dichtbereich 14, so dass das Wellenelement 30 des Dorns 8 lediglich durch die Halteschräge 34 gebildet wird.

Die Schrägen 34, 36 haben die vorteilhafte Eigenschaft, dass sie einen Kompromiss zwischen einem Montageaufwand und einem Demontageaufwand darstellen, indem die aufzubringenden Steck- und Lösekräfte S, L durch die jeweiligen Steigungen angepasst werden können. Weiterhin hat eine Ausführung, die sowohl eine Einführschräge 36 als auch eine Halteschräge 34 aufweist, den Vorteil, dass sich das Wellenelement 30 des Dorns 8 am Wellenmaximum 32 des Wellenelements 30 zwischen zwei Wellentälern 24 des Wellrohrs 4 anordnet und weiter in die radiale Richtung eines Wellenberges 22 ragt. Das Wellrohr 4 ist dadurch stärker gegen eine axiale Bewegung zur Mittelachse X blockiert bzw. behindert. Weiterhin ist die Anordnung des Wellenmaximums 32 des Wellenelements 30 im Bereich eines Wellenberges 22 von Vorteil, weil der Außendurchmesser DM des Dorns 8 im Wellenmaximum 32 größer gestaltet werden kann. Beim Aufstecken des Wellrohrs 4 überwinden die betreffenden Wellentäler 24 das Wellenmaximum 32 des Wellenelements 30 lediglich einmal, wobei sich entsprechend den Figuren 1 und 2 in einer aufgesteckten Lage das Wellenelement 30 des Dorns 8 mit seinem Wellenmaximum 32 des Wellenelements 30 benachbart zu einem Wellenberg 22 befindet. Das Wellrohr 4 bei dem Wellenberg 22 weist einen größeren Innendurchmesser DB auf als im Wellental 24. Dadurch wird das Wellrohr 4 über seine Standzeit weniger belastet bei einem trotzdem hohen Lösewiderstand, welcher durch den geringeren Innendurchmesser DT des Wellrohrs 4 im Wellental 24 gewährleistet wird.

Im Sinne einer vorteilhaften Einstellung der Steck- und Lösekräfte S, L ist in einer bevorzugten Variante die Einführschräge 36 in Aufsteckrichtung A vorzugsweise flacher zum Wellenmaximum 32 des Wellenelements 30 ansteigend ausgebildet als die Halteschräge 34 gegen die Aufsteckrichtung A zu dem Wellenmaximum 32 des Wellenelements 30. Diese Ausführung ist in den Figuren 1 und 2 dargestellt. Zweckmäßig ist dadurch die aufzuwendende Lösekraft L gegen die Aufsteckrichtung A zum Lösen des Wellrohrs 4 von dem Verbinderteil 2 größer als die aufzuwendende Steckkraft S in Aufsteckrichtung A zum Aufstecken des Wellrohrs 4.

Entsprechend der in den Figuren 1 und 2 dargestellten bevorzugten Ausführungsform ist zumindest die Halteschräge 34 in einem Anlagebereich für das Wellental 24 des Wellrohrs 4 bogenförmig mit einem Halteradius 38 gegen die Aufsteckrichtung A zum Wellenmaximum 32 des Wellenelements 30 ansteigend ausgebildet. Insbesondere sinusförmige Wellrohre 4 können sich dabei leicht zumindest im Anlagebereich an die in einem Halteradius 38 bogenförmige ausgebildete Halteschräge 34 anlegen und bei einer axialen Beanspruchung gegen die Aufsteckrichtung A sich zu einer großflächigen Anlage an der Halteschräge 34 verformen. Zweckmäßig ist das Wellrohr 4 durch ein derartiges Wellenelement 30 des Dorns 8 auf Grund der großen Auflagefläche zumindest teilweise, insbesondere größtenteils, durch eine Reibkraft auf dem Dorn 8 gegen die Aufsteckrichtung A gehalten. Insbesondere wird durch die radiale Rückstellkraft F auf Grund der Aufdehnung des Wellrohrs 4 bzw. des Wellentals 24 eine Anpresskraft erzeugt. Insbesondere verringert diese Ausführung weiterhin die Notwendigkeit von scharfkantigen Haltezähnen 40 bzw. macht scharfkantige Haltezähne 40 unnötig.

Die vorteilhafte Wirkung des Wellenelements 30 mit einer bogenförmigen Halteschräge 34 lässt sich auch in einer vorteilhaften Ausführung, wie in den Figuren 1 und 2 dargestellt, dadurch umsetzen, dass der Halteradius 38 der bogenförmigen Halteschräge 34 einem Wellenradius 42 eines Innenmantelabschnitts 44 des Wellrohrs 4 im Bereich des Wellentals 24 entspricht. Eine derartige vorteilhafte Ausführung hat den Vorteil, dass die Halteschräge 34 derart auf den Innenmantelabschnitt 44 des Wellrohrs 4 angepasst ausgebildet ist, dass ohne eine Anpressung des Wellentals 24 an die Halteschräge 34, das Wellrohr 4 großflächig an der Halteschräge 34 anliegen würde. Die Halteschräge 34 ist daher in einem nicht aufgesteckten Zustand des Wellrohres 4 entsprechend Figur 3 gekennzeichnet. Zweckmäßig wird eine Reibfläche und dadurch der axiale Widerstand bzw. die aufzubringende Lösekraft L gegen die Aufsteckrichtung A erhöht.

Zweckmäßig weist der Dorn 8 eine Außenmantelfläche 46 auf, welche zumindest im Bereich der Halteschräge 34 vorzugsweise eine Haltestruktur ausgebildet hat. Die Ausführung einer Halteschräge 34 mit einer Haltestruktur ist nicht dargestellt. Die Haltestruktur steigert die Reibkraft zumindest gegen die Aufsteckrichtung A zwischen dem Wellrohr 4 und dem Dorn 8 bzw. dem Wellenelement 30 des Dorns 8. Diese Ausführung verringert vorteilhaft die Gefahr eines Lösens des Wellrohrs 4 vom Dorn 8 gegen die Aufsteckrichtung A, indem die aufzubringenden Lösekräfte L erhöht werden. Haltestrukturen im Sinne dieser Erfindung können als eine aufgeraute Oberflächenstruktur, Beulen oder Rillen ausgebildet sein.

In Figur 2 ist eine besonders bevorzugte Ausführungsform der Erfindung dargestellt. Insbesondere um besonders großen Druckbelastungen in dem Rohrleitungskanal 20 oder einer hohen Belastung der Verbindungsanordnung 1, welche die Gefahr eines Lösens des Wellrohrs 4 vom Verbinderteil 2 auslösen könnte, vorzubeugen, ist vorzugsweise ein Halteelement als ein zu der Mittelachse X, insbesondere vollumfänglicher, Haltezahn 40 ausgebildet.

Insbesondere weist der Haltezahn 40, wie in Figur 2 dargestellt, eine Aufsteckschräge 48 auf, welche vorzugsweise den Außendurchmesser des Dorns 8 in Aufsteckrichtung A auf einen Klemmdurchmesser DK vergrößert. Zweckmäßig weist der Haltezahn 40 dabei eine in Aufsteckrichtung A weisende Klemmkante, oder, wie in Figur 2 dargestellt, eine Schneidkante 50 auf. Der Haltezahn 40 ergänzt dabei das Wellenelement 30 und sorgt für eine gesteigerte Haltekraft und verhindert, dass sich das Wellrohr 4 gegen die Aufsteckrichtung A von dem Dorn 8 löst. Mittels der Klemmkante blockiert der Haltezahn 40 vorteilhaft das Wellental 24 gegen die Aufsteckrichtung A zumindest formschlüssig. Bei der Ausführung mit einer Schneidkante 50 gräbt sich die Schneidkante 50 in den Innenmantel 18 des Wellrohrs 4, so dass sich das Wellrohr 4 nicht gegen die Aufsteckrichtung A von dem Dorn 8 löst.

Insbesondere wirken der Haltezahn 40 und das Wellenelement 30 des Dorns 8 synergetisch derart zusammen, dass Beschädigungen in dem Innenmantel 18 des Wellrohrs 4 möglichst axialdistanziert zur Mittelachse X von dem Dichtbereich 14 auftreten. Erreicht wird dies mittels einer vorteilhaften, in Figur 2 dargestellten, Ausführung, gemäß welcher das Wellenelement 30 des Dorns 8 axial zur Mittelachse X zwischen dem Haltezahn 40 und dem Dichtbereich 14 angeordnet ist.

Ein anderer synergetischer Effekt bewirkt, dass durch den Haltezahn 40 für einen ausreichenden Widerstand gegen ein Lösen gegen die Aufsteckrichtung A im Vergleich zu bekannten Verbindungsanordnungen mit ausschließlich einem oder mehreren Haltezähnen 40 weniger Material des Wellrohrs 4 abgetragen wird und insbesondere bei einer Ausführung mit nur einem Haltezahn 40 dieser sich nicht oder nur geringfügiger in die Wellrohrwandung 16 des Wellrohrs 4 eingräbt.

Insbesondere entspricht der Klemmdurchmesser DK des Dorns 8 mindestens dem Außendurchmesser DM des Wellrohrs 4 im Wellenmaximum 32 des Wellenelements 30. Weiterhin ist es zweckmäßig, wenn in Aufsteckrichtung A unmittelbar hinter der Klemmkante oder der Schneidkante 50 der Außendurchmesser des Dorns 8 dem Haltedurchmesser DH entspricht.

In einer abgewandelten Variante ist die Klemmkante oder die Schneidkante 50 als sprunghafter Wechsel, von dem Klemmdurchmesser DK auf einen kleineren Durchmesser des Dorns 8, insbesondere dem Haltedurchmesser DH ausgebildet.

In einer vorteilhaften und in den Figuren 1 und 2 dargestellten Ausführungsform ist der Haltedurchmesser DH des Dorns 8 geringer als der Außendurchmesser DD des Dorns 8 im Dichtbereich 14. Dadurch wird das Wellrohr 4 im Haltebereich 12 geringfügiger radial belastet, was aufgrund des Halteelements 40 und des axial versetzten Dichtbereichs 14 dadurch möglich ist, dass die radiale Verspannung vornehmlich zum Wahren der notwendigen Dichtigkeit erforderlich ist. Somit summieren sich die Belastungen im Haltebereich 12 nicht auf ein kritisches Niveau, wodurch die Standzeit verbessert wird.

Ebenfalls in den Figuren 1 und 2 ist eine bevorzugte Ausführung dargestellt, wonach der Außendurchmesser DM des Wellenelements 30 des Dorns 8 im Wellenmaximum 32 des Wellenelements 30 größer ist als der Außendurchmesser DD des Dorns 8 im Dichtbereich 14. Dadurch wird es in beschriebener Art und Weise ermöglicht, dass sich das Wellenelement 30 des Dorns 8 zumindest teilweise im Bereich eines Wellenberges 22 des Wellrohrs 4 anordnet und den Widerstand gegen Bewegungen axial zur Mittelachse X erhöht.

Besonders bevorzugt ist eine Bemaßung, bei der der Außendurchmesser DM des Wellenelements 30 des Dorns 8 im Wellenmaximum 32 des Wellenelements 30 in einem Bereich von 10 % bis 35 %, insbesondere 15 % bis 30 %, vorzugsweise 20 % bis 25 % größer ist als der Innendurchmesser DT des Wellrohrs 4 im Wellental 24.

Gemäß einer weiteren zweckmäßigen Ausführung ist der Außendurchmesser DD des Dorns 8 im Dichtbereich 14 in einem Bereich von 5 % bis 30 %, insbesondere 10 % bis 25 %, vorzugsweise 15 % bis 20 % größer als der Innendurchmesser DT des Wellrohrs 4 im Wellental 24.

In einer weiteren Ausführung der Erfindung sind die Dichtungseigenschaften der Verbindungsanordnung 1 dadurch verbessert, dass der Dichtbereich 14 eine axiale Erstreckung 52 zur Mittelachse X aufweist, welche mindestens einem axial zum Rohrleitungskanal 20 gemessenen Abstand 54 zwischen zwei Wellentälern 24 des Wellrohrs 4 entspricht. Insbesondere wird von einem axialen Abstand in einem, in Figur 3 dargestellten, nicht aufgesteckten Zustand und insbesondere nicht gestauchten Zustand des Wellrohrs 4 ausgegangen. In den Figuren 1 und 2 ist eine besonders bevorzugte Ausführung abgebildet, gemäß welcher der Dichtbereich 14 eine axiale Erstreckung 52 zur Mittelachse X aufweist, welche mindestens eineinhalbmal einem zum Rohrleitungskanal 20 axialen Abstand 54 zwischen zwei Wellentälern 24 des Wellrohrs 4 entspricht.

Vorzugsweise beträgt der einfache Abstand 54 zwischen zwei Wellentälern 24 4 mm, daraus ergibt sich für die vorteilhafte Ausführung eine Erstreckung 52 des Dichtbereichs 14 von mindestens 4 mm, besonders bevorzugt 6 mm, axial zur Mittelachse X.

Für eine besonders günstige und effiziente Herstellung der Verbindungsanordnung 1 hat sich vorteilhaft die Verwendung von sinusförmigen Wellrohren 4 herausgestellt. Im Besonderen kann das Verbinderteil 2 hinsichtlich der Herstellung verbessert werden, indem das Verbinderteil 2 monolithisch einstückig ausgebildet ist. Als vorteilhaft hat sich zudem herausgestellt, wenn das Verbinderteil 2 aus einem thermoplastischen Kunststoff ausgebildet ist.

### Bezugszeichenliste

- 1: Verbindungsanordnung
- 2: Verbinderteil
- 4: Wellrohr
- 6: Austrittsöffnung
- 8: Dorn
- 10: Mündungsbereich
- 12: Haltebereich
- 14: Dichtbereich
- 16: Wellrohrwandung
- 18: Innenmantel
- 20: Rohrleitungskanal
- 22: Wellenberg
- 24: Wellental
- 26: Oberfläche im Dichtbereich
- 28: Oberfläche im Mündungsbereich
- 30: Wellenelement
- 32: Wellenmaximum
- 34: Halteschräge
- 36: Einführschräge
- 38: Halteradius
- 40: Haltezahn
- 42: Wellenradius
- 44: Innenmantelabschnitt
- 46: Außenmantelfläche
- 48: Aufsteckschräge
- 50: Schneidkante
- 52: Axiale Erstreckung des Dichtbereichs
- 54: Abstand zwischen zwei Wellentälern
- X: Mittelachse
- L: Lösekraft
- S: Steckkraft
- A: Aufsteckrichtung
- F: Rückstellkraft

- DD: Durchmesser des Dorns im Dichtbereich
- DK: Klemmdurchmesser
- DB: Innendurchmesser bei einem Wellenberg
- DT: Innendurchmesser bei einem Wellental
- DH: Haltedurchmesser
- DM: Durchmesser des Wellenelements im Wellenmaximum

## Patentansprüche

1. Verbindungsanordnung (1) aufweisend ein einstückiges Verbinderteil (2) und ein fluidisch mit dem Verbinderteil (2) verbundenes Wellrohr (4), wobei das Verbinderteil (2) einen sich entlang einer Mittelachse (X) erstreckenden Durchgangskanal aufweist, welcher einseitig zu dem Verbinderteil (2) in einem an dem Verbinderteil (2) angeformten Dorn (8) mündet, wobei der Dorn (8) einen Haltebereich (12) und einen Dichtbereich (14) aufweist, und im Haltebereich (12) mindestens zwei Halteelemente axial zur Mittelachse (X) benachbart zueinander angeordnet sind, wobei das Wellrohr (4) mit einem gewellten Aufsteckabschnitt in eine Aufsteckrichtung (A) auf den Dorn (8) aufgesteckt und in dem Haltebereich (12) und dem Dichtbereich (14) angeordnet und fluidisch mit dem Durchgangskanal des Verbinderteils (2) verbunden ist, wobei der Haltebereich (12) und der Dichtbereich (14) axial zu der Mittelachse (X) hintereinander angeordnet sind, wobei der Dorn (8) im Dichtbereich (14) eine glatte, zum Wellrohr (4) weisende Oberfläche (26) ausgebildet hat, welche einen größeren, zum Wellrohr (4) weisenden Außendurchmesser (DD) aufweist als ein zum Dorn (8) weisender Innendurchmesser (DT) des Wellrohrs (4) in einem Wellental (24),
**dadurch gekennzeichnet, dass**
zumindest ein Halteelement als ein, insbesondere zu der Mittelachse (X) vollumfängliches, Wellenelement (30) des Dorns (8) ausgebildet ist, welches an einem Wellenmaximum (32) des Wellenelementes (30) einen größeren, zum Wellrohr (4) weisenden Außendurchmesser (DM) aufweist als der Innendurchmesser (DT) des Wellrohrs (4) in dem Wellental (24) und das Wellenelement (30) eine Halteschräge (34) aufweist, welche den Außendurchmesser (DM) des Wellenelementes (30) im Wellenmaximum (32) in Aufsteckrichtung (A) auf einen Haltedurchmesser (DH) verringert.

2. Verbindungsanordnung (1) nach Anspruch 1,
**dadurch gekennzeichnet, dass**
zumindest zwei, insbesondere genau zwei Halteelemente als zwei zu der Mittelachse (X), insbesondere vollumfängliche, Wellenelemente (30) des Dorns (8) ausgebildet sind, welche an einem Wellenmaximum (32) des jeweiligen Wellenelementes (30) einen größeren, zum Wellrohr (4) weisenden Außendurchmesser (DM) aufweisen als der Innendurchmesser (DT) des Wellrohrs (4) in dem Wellental (24).

3. Verbindungsanordnung (1) nach Anspruch 1 oder 2,
**dadurch gekennzeichnet, dass** das Wellenelement (30) eine Einführschräge (36) aufweist, welche den Außendurchmesser des Dorns (8) in Aufsteckrichtung (A) auf den Außendurchmesser (DM) im Wellenmaximum (32) vergrößert.

4. Verbindungsanordnung (1) nach Anspruch 3,
**dadurch gekennzeichnet, dass** die Einführschräge (36) in Aufsteckrichtung (A) flacher zum Wellenmaximum (32) ansteigend ausgebildet ist als die Halteschräge (34) gegen die Aufsteckrichtung (A) zu dem Wellenmaximum (32) des Wellenelements (30).

5. Verbindungsanordnung (1) nach einem der Ansprüche 2 bis 4,
**dadurch gekennzeichnet, dass** zumindest die Halteschräge (34) in einem Anlagebereich für das Wellental (24) des Wellrohrs (4) bogenförmig mit einem Halteradius (38) gegen die Aufsteckrichtung (A) zum Wellenmaximum (32) des Wellenelements (30) ansteigend ausgebildet ist.

6. Verbindungsanordnung (1) nach Anspruch 5,
**dadurch gekennzeichnet, dass** der Halteradius (38) der Halteschrägen (34) einem Wellenradius (42) eines Innenmantelabschnitts (44) des Wellrohrs (4) im Bereich des Wellentals (24) entspricht.

7. Verbindungsanordnung (1) nach einem der Ansprüche 2 bis 6,
**dadurch gekennzeichnet, dass** der Dorn (8) eine Außenmantelfläche (46) aufweist, welche zumindest im Bereich der Halteschräge (34) eine Haltestruktur ausgebildet hat, welche eine Reibkraft zumindest gegen die Aufsteckrichtung (A) zwischen dem Wellrohr (4) und dem Dorn (8) steigert.

8. Verbindungsanordnung (1) nach einem der Ansprüche 1 bis 7,
**dadurch gekennzeichnet, dass** ein Halteelement als ein zu der Mittelachse (X), insbesondere vollumfänglicher, Haltezahn (40) ausgebildet ist, welcher eine Aufsteckschräge (48) aufweist, welche den Außendurchmesser des Dorns (8) in Aufsteckrichtung (A) auf einen Klemmdurchmesser (DK) vergrößert und eine in Aufsteckrichtung (A) weisende Klemmkante oder Schneidkante (50) aufweist.

9. Verbindungsanordnung (1) nach Anspruch 8,
**dadurch gekennzeichnet, dass** der Klemmdurchmesser (DK) des Dorns (8) mindestens dem Außendurchmesser (DM) des Wellenelements (30) im Wellenmaximum (32) entspricht und vorzugsweise in Aufsteckrichtung (A) unmittelbar nach der Klemmkante oder Schneidkante (50) der Außendurchmesser des Dorns 8 dem Haltedurchmesser (DH) entspricht.

10. Verbindungsanordnung (1) nach einem der Ansprüche 3 bis 9,
**dadurch gekennzeichnet, dass** der Haltedurchmesser (DH) des Dorns (8) geringer ist als der Außendurchmesser (DD) des Dorns (8) im Dichtbereich (14).

11. Verbindungsanordnung (1) nach einem der Ansprüche 1 bis 10,
**dadurch gekennzeichnet, dass** der Außendurchmesser (DM) des Wellenelements (30) im Wellenmaximum (32) größer ist als der Außendurchmesser (DD) des Dorns (8) im Dichtbereich (14).

12. Verbindungsanordnung (1) nach einem der Ansprüche 1 bis 11,
**dadurch gekennzeichnet, dass** der Außendurchmesser (DM) des Wellenelements (30) im Wellenmaximum (32) in einem Bereich von 10 % bis 35 %, insbesondere 15 % bis 30 %, vorzugsweise 20 % bis 25 % größer ist als der Innendurchmesser (DT) des Wellrohrs (4) im Wellental (24).

13. Verbindungsanordnung (1) nach einem der Ansprüche 1 bis 12,
**dadurch gekennzeichnet, dass** der Außendurchmesser (DD) des Dorns (8) im Dichtbereich (14) in einem Bereich von 5 % bis 30 %, insbesondere 10 % bis 25 %, vorzugsweise 15 % bis 20 % größer ist als der Innendurchmesser (DT) des Wellrohrs (4) in dem Wellental (24).

14. Verbindungsanordnung (1) nach einem der Ansprüche 1 bis 13.
**dadurch gekennzeichnet, dass** der Dichtbereich (14) eine axiale Erstreckung (52) zur Mittelachse (X) aufweist, welche mindestens einem zu einem Rohrleitungskanal (20) axialen Abstand (54) zwischen zwei Wellentälern (24) des Wellrohrs (4) entspricht.

15. Verbindungsanordnung (1) nach Anspruch 14.
**dadurch gekennzeichnet, dass** der Dichtbereich (14) eine axiale Erstreckung (52) zur Mittelachse (X) aufweist, welche mindestens eineinhalbmal einem zum Rohrleitungskanal (20) axialen Abstand (54) zwischen zwei Wellentälern (24) des Wellrohrs (4) entspricht.

16. Verbindungsanordnung (1) nach einem der Ansprüche 1 bis 15,
**dadurch gekennzeichnet, dass** das Verbinderteil (2) monolithisch einstückig, insbesondere aus einem thermoplastischem Kunststoff, ausgebildet ist.

## Claims

1. A Connector assembly (1) comprising a one-piece connector element (2) and a corrugated tube (4) fluidically connected to the connector element (2), wherein the connector element (2) comprises a through channel extending along a center axis (X), which opens on one side of the connector element (2) into a mandrel (8) formed on the connector element (2), the mandrel (8) having a holding area (12) and a sealing area (14), and at least two holding elements being arranged in the holding area (12) axially adjacent to the center axis (X), wherein the corrugated tube (4) is slipped onto the mandrel (8) with a corrugated slip-on section in a slip-on direction (A) and is arranged in the holding area (12) and the sealing area (14) and is fluidically connected to the through channel of the connector element (2), wherein the holding area (12) and the sealing area (14) are arranged one behind the other axially to the center axis (X), wherein the mandrel (8) in the sealing area (14) has formed a flat surface (26) facing the corrugated tube (4), which has a larger outer diameter (DD) facing the corrugated tube (4) than an inner diameter (DT) of the corrugated tube (4) facing the mandrel (8) in a wave trough (24)
**characterized in that**
at least one holding element is formed as a wave element (30) of the mandrel (8) which is particularly fully circumferential with respect to the center axis (X) and which at a wave maximum (32) of the wave element (30) has a larger outer diameter (DM) facing the corrugated tube (4) than the inner diameter (DT) of the corrugated tube (4) in the wave trough (24), and the wave element (30) has a holding slope (34) which reduces the outer diameter (DM) of the wave element (30) in the wave maximum (32) in the slip-on direction (A) to a holding diameter (DH).

2. Connector assembly (1) according to claim 1,
**characterized in that**
at least two, in particular exactly two, holding elements are formed as two wave elements (30) of the mandrel (8), in particular fully circumferential, with respect to the center axis (X), which wave elements have, at a wave maximum (32) of the respective wave element (30), a larger outer diameter (DM) facing the corrugated tube (4) than the inner diameter (DT) of the corrugated tube (4) in the wave trough (24).

3. Connector assembly (1) according to claim 1 or 2,
**characterized in that** the wave element (30) has an insertion slope (36) which extends the outer diameter of the mandrel (8) in the slip-on direction (A) to the outer diameter (DM) at the wave maximum (32).

4. Connector assembly (1) according to claim 3,
**characterized in that** the insertion slope (36) in slip-on direction (A) is designed to rise more flatly towards the wave maximum (32) than the holding slope (34) against the slip-on direction (A) to the wave maximum (32) of the wave element (30).

5. Connector assembly (1) according to any one of claims 2 to 4,
**characterized in that** at least the holding slope (34) in a contact area for the wave trough (24) of the corrugated tube (4) is arcuate with a holding radius (38) against the slip-on direction (A) towards the wave maximum (32) of the wave element (30).

6. Connector assembly (1) according to claim 5,
**characterized in that** the holding radius (38) of the holding slopes (34) corresponds to a wave radius (42) of an inner jacket section (44) of the corrugated tube (4) in the area of the wave trough (24).

7. Connector assembly (1) according to any one of claims 2 to 6,
**characterized in that** the mandrel (8) has an outer jacket section (46) which, at least in the area of the holding slope (34), has formed a holding structure, which generates a frictional force at least against the slip-on direction (A) between the corrugated tube (4) and the mandrel (8).

8. Connector assembly (1) according to any one of claims 1 to 7,
**characterized in that** a holding element is in the form of a holding tooth (40) which in particular is fully circumferential with respect to the center axis (X) and which has a slip-on slope (48) which increases the outer diameter of the mandrel (8) in the slip-on direction (A) to a clamping diameter (DK) and has a clamping edge or cutting edge (50) pointing in the slip-on direction (A).

9. Connector assembly (1) according to claim 8,
**characterized in that** the clamping diameter (DK) of the mandrel (8) corresponds at least to the outer diameter (DM) of the wave element (30) in the shaft maximum (32) and preferably in the slip-on direction (A) immediately after the clamping edge or cutting edge (50) the outer diameter of the mandrel 8 corresponds to the holding diameter (DH).

10. Connector assembly (1) according to any one of claims 3 to 9,
**characterized in that** the holding diameter (DH) of the mandrel (8) is is smaller than the outer diameter (DD) of the mandrel (8) in the sealing area (14).

11. Connector assembly (1) according to any one of claims 1 to 10,
**characterized in that** the outer diameter (DM) of the wave element (30) in the wave maximum (32) is larger than the outer diameter (DD) of the mandrel (8) in the sealing area (14).

12. Connector assembly (1) according to any one of claims 1 to 11,
**characterized in that** the outer diameter (DM) of the wave element (30) in the wave maximum (32) is in a range from 10 % to 35 %, in particular 15 % to 30 %, preferably 20 % to 25 % larger than the inner diameter (DT) of the corrugated tube (4) in the wave trough (24).

13. Connector assembly (1) according to any one of claims 1 to 12,
**characterized in that** the outer diameter (DD) of the mandrel (8) is in the sealing area (14) is in a range from 5 % to 30 %, in particular 10 % to 25 %, preferably 15 % to 20 %, larger than the inner diameter (DT) of the corrugated tube (4) in the wave trough (24).

14. Connector assembly (1) according to any one of claims 1 to 13.
**characterized in that** the sealing area (14) has an axial extension (52) with respect to the center axis (X), which is at least equal to an axial a distance (54) axial to a pipe channel (20) between two wave troughs (24) of the corrugated tube (4).

15. Connector assembly (1) according to claim 14.
**characterized in that** the sealing area (14) has an axial extension (52) with respect to the center axis (X), which corresponds to at least one and a half times an axial distance (54) relative to the pipe channel (20) between two wave troughs (24) of the corrugated tube (4).

16. Connector assembly (1) according to any one of claims 1 to 15,
**characterized in that** the connector element (2) is formed monolithically in one piece, in particular from a thermoplastic material.

## Revendications

1. Agencement de liaison (1) présentant une partie de liaison (2) d'une seule pièce et un tube ondulé (4) relié fluidiquement à la partie de liaison (2), la partie de liaison (2) présentant un canal de passage s'étendant le long d'un axe central (X), qui débouche d'un côté de la partie de liaison (2) dans un mandrin (8) formé sur la partie de liaison (2), le mandrin (8) présentant une zone de retenue (12) et une zone d'étanchéité (14), et dans la zone de retenue (12), au moins deux éléments de retenue étant agencés au voisinage l'un de l'autre axialement par rapport à l'axe central (X), le tube ondulé (4) étant enfiché sur le mandrin (8) avec une section d'enfichage ondulée dans une direction d'enfichage (A) et étant agencé dans la zone de retenue (12) et la zone d'étanchéité (14) et étant relié fluidiquement au canal de passage de la partie de liaison (2), la zone de retenue (12) et la zone d'étanchéité (14) étant agencées l'une derrière l'autre axialement par rapport à l'axe central (X), le mandrin (8) ayant réalisé dans la zone d'étanchéité (14) une surface lisse (26) orientée vers le tube ondulé (4), qui présente un diamètre extérieur (DD) orienté vers le tube ondulé (4) plus grand qu'un diamètre intérieur (DT) du tube ondulé (4) orienté vers le mandrin (8) dans un creux d'ondulation (24),
**caractérisé en ce**
**qu'**au moins un élément de retenue est réalisé sous la forme d'un élément d'ondulation (30) du mandrin (8), notamment sur tout le pourtour, par rapport à l'axe central (X), qui présente, à un maximum d'ondulation (32) de l'élément d'ondulation (30), un diamètre extérieur (DM) orienté vers le tube ondulé (4) plus grand que le diamètre intérieur (DT) du tube ondulé (4) dans le creux d'ondulation (24) et l'élément d'ondulation (30) présente un biseau de retenue (34) qui réduit le diamètre extérieur (DM) de l'élément d'ondulation (30) au maximum d'ondulation (32) dans la direction d'enfichage (A) à un diamètre de retenue (DH).

2. Agencement de liaison (1) selon la revendication 1, **caractérisé en ce qu'**au moins deux, notamment exactement deux éléments de retenue sont réalisés sous la forme de deux éléments d'ondulation (30) du mandrin (8), notamment sur tout le pourtour, par rapport à l'axe central (X), qui présentent, à un maximum d'ondulation (32) de l'élément d'ondulation (30) respectif, un diamètre extérieur (DM) orienté vers le tube ondulé (4) plus grand que le diamètre intérieur (DT) du tube ondulé (4) dans le creux d'ondulation (24).

3. Agencement de liaison (1) selon la revendication 1 ou 2, **caractérisé en ce que** l'élément d'ondulation (30) présente un biseau d'insertion (36) qui augmente le diamètre extérieur du mandrin (8) dans la direction d'enfichage (A) jusqu'au diamètre extérieur (DM) au maximum d'ondulation (32).

4. Agencement de liaison (1) selon la revendication 3, **caractérisé en ce que** le biseau d'insertion (36) dans la direction d'enfichage (A) est réalisé sous forme plus plate en montant vers le maximum d'ondulation (32) que le biseau de retenue (34) à l'encontre de la direction d'enfichage (A) vers le maximum d'ondulation (32) de l'élément d'ondulation (30).

5. Agencement de liaison (1) selon l'une quelconque des revendications 2 à 4, **caractérisé en ce qu'**au moins le biseau de retenue (34) est réalisé dans une zone d'appui pour le creux d'ondulation (24) du tube ondulé (4) en forme d'arc avec un rayon de retenue (38) montant à l'encontre de la direction d'enfichage (A) vers le maximum d'ondulation (32) de l'élément d'ondulation (30).

6. Agencement de liaison (1) selon la revendication 5, **caractérisé en ce que** le rayon de retenue (38) des biseaux de retenue (34) correspond à un rayon d'ondulation (42) d'une section d'enveloppe intérieure (44) du tube ondulé (4) dans la zone du creux d'ondulation (24).

7. Agencement de liaison (1) selon l'une quelconque des revendications 2 à 6, **caractérisé en ce que** le mandrin (8) présente une surface d'enveloppe extérieure (46) qui, au moins dans la zone du biseau de retenue (34), a réalisé une structure de retenue qui augmente une force de frottement au moins à l'encontre de la direction d'enfichage (A) entre le tube ondulé (4) et le mandrin (8) .

8. Agencement de liaison (1) selon l'une quelconque des revendications 1 à 7, **caractérisé en ce qu'**un élément de retenue est réalisé sous la forme d'une dent de retenue (40), notamment sur tout le pourtour, par rapport à l'axe central (X), qui présente un biseau d'enfichage (48) qui augmente le diamètre extérieur du mandrin (8) dans la direction d'enfichage (A) jusqu'à un diamètre de serrage (DK) et qui présente une arête de serrage ou une arête de coupe (50) orientée dans la direction d'enfichage (A).

9. Agencement de liaison (1) selon la revendication 8, **caractérisé en ce que** le diamètre de serrage (DK) du mandrin (8) correspond au moins au diamètre extérieur (DM) de l'élément d'ondulation (30) au maximum d'ondulation (32) et, de préférence dans la direction d'enfichage (A), immédiatement après l'arête de serrage ou l'arête de coupe (50), le diamètre extérieur du mandrin 8 correspond au diamètre de retenue (DH).

10. Agencement de liaison (1) selon l'une quelconque des revendications 3 à 9, **caractérisé en ce que** le diamètre de retenue (DH) du mandrin (8) est inférieur au diamètre extérieur (DD) du mandrin (8) dans la zone d'étanchéité (14) .

11. Agencement de liaison (1) selon l'une quelconque des revendications 1 à 10, **caractérisé en ce que** le diamètre extérieur (DM) de l'élément d'ondulation (30) au maximum d'ondulation (32) est supérieur au diamètre extérieur (DD) du mandrin (8) dans la zone d'étanchéité (14).

12. Agencement de liaison (1) selon l'une quelconque des revendications 1 à 11, **caractérisé en ce que** le diamètre extérieur (DM) de l'élément d'ondulation (30) au maximum d'ondulation (32) est supérieur au diamètre intérieur (DT) du tube ondulé (4) dans le creux d'ondulation (24) dans une plage de 10 % à 35 %, notamment de 15 % à 30 %, de préférence de 20 % à 25 %.

13. Agencement de liaison (1) selon l'une quelconque des revendications 1 à 12, **caractérisé en ce que** le diamètre extérieur (DD) du mandrin (8) dans la zone d'étanchéité (14) est supérieur au diamètre intérieur (DT) du tube ondulé (4) dans le creux d'ondulation (24) dans une plage de 5 % à 30 %, notamment de 10 % à 25 %, de préférence de 15 % à 20 %.

14. Agencement de liaison (1) selon l'une quelconque des revendications 1 à 13, **caractérisé en ce que** la zone d'étanchéité (14) présente une extension axiale (52) par rapport à l'axe central (X) qui correspond au moins à une distance axiale (54) par rapport à un canal de conduite tubulaire (20) entre deux creux d'ondulation (24) du tube ondulé (4).

15. Agencement de liaison (1) selon la revendication 14, **caractérisé en ce que** la zone d'étanchéité (14) présente une extension axiale (52) par rapport à l'axe central (X) qui correspond à au moins une fois et demie une distance axiale (54) par rapport au canal de conduite tubulaire (20) entre deux creux d'ondulation (24) du tube ondulé (4) .

16. Agencement de liaison (1) selon l'une quelconque des revendications 1 à 15, **caractérisé en ce que** la partie de liaison (2) est réalisée de manière monolithique en une seule pièce, notamment en une matière thermoplastique.
